# EUROPEAN PATENT SPECIFICATION

(11) **EP 2 623 912 B1**
(45) Date of publication and mention of the grant of the patent: **24.06.2015**
(21) Application number: 11828261.5
(22) Date of filing: 28.02.2011
(51) Int. Cl.: F28D 20/00, F24F 5/00, F25B 1/00

(54) **HEAT STORAGE DEVICE AND AIR CONDITIONER USING SAME**
WÄRMESPEICHERVORRICHTUNG UND KLIMAANLAGE DAMIT
DISPOSITIF DE STOCKAGE DE CHALEUR ET CLIMATISEUR L'UTILISANT

(30) Priority: 01.10.2010 JP 2010223755
(43) Date of publication of application: 07.08.2013
(73) Proprietor: Panasonic Corporation, Osaka 571-8501 (JP)
(72) Inventor: YAMAMOTO, Noriaki, Osaka 540-6207 (JP); KURISUTANI, Hiroharu, Osaka 540-6207 (JP); IMASAKA, Toshiyuki, Osaka 540-6207 (JP); SHIMIZU, Akihiko, Osaka 540-6207 (JP); INOUE, Shigeyuki, Osaka 540-6207 (JP)
(74) Representative: Eisenführ Speiser
(86) International application number: PCT/JP2011/001135
(87) International publication number: WO 2012/042691

(56) References cited:
- JP-A- H0 331 666
- JP-A- 63 233 264
- JP-A- H04 257 671
- JP-A- H05 223 410
- JP-A- 2007 132 303
- JP-B2- 2 705 734

## Description

### Technical Field

The present invention relates to a heat storage device used in contact with a heat source and also to an air conditioner having the heat storage device. JP-H-05223410 discloses a heat storage device with the features in the preamble of claim 1.

### Background Art

In order for a conventional heat pump air conditioner to defrost an outdoor heat exchanger during heating, a flow of refrigerant is generally switched by a four-way valve from a heating cycle to a cooling cycle to allow a high-temperature and high-pressure refrigerant to flow through the outdoor heat exchanger. In this defrosting method, an amount of heat for use in heating a room is directed to defrosting the outdoor heat exchanger, thus posing a problem of warmth being lost. Also, in order to supply a sufficiently heated air current from an indoor unit during heating, air is blown into the room after a piping temperature of the indoor unit has been increased to a predetermined value and, hence, there is a time delay from the start of operation to the start of air supply. This is also a disadvantage of the heat pump air conditioner.

In order to cover such disadvantages, a technique of incorporating a heat storage device into a refrigeration cycle to make use of waste heat of a compressor stored in a heat storage device during heating is often used for improvement of defrosting or rising characteristics (see, for example, Patent

Document 1).

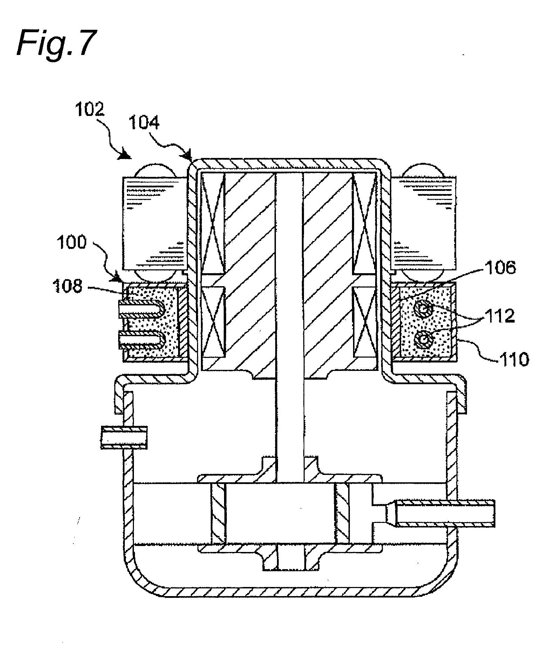

Fig. 7 is a vertical cross-sectional view of a conventional heat storage device. In Fig. 7, a heat storage device 100 is fixed to an outer surface of a partition wall 104 of a compressor 102. The heat storage device 100 includes a metallic member 106 made of an aluminum foil plate, a copper plate or the like and wound around the partition wall 104 so as to be held in contact with the outer surface thereof.

The heat storage device 100 accommodates a heat storage material 108 to store heat generated by the compressor 102 through the partition wall 104 and the metallic member 106. The heat storage material 108 is filled in a space formed by an enclosure 110 having a U-shaped vertical section and the metallic member 106 referred to above. In addition to the heat storage material 108, a heating pipe 112 for heating an inflow refrigerant is disposed inside the space.

### Prior Art Document(s)

Patent Document 1: Japanese Patent No. 2705734

### Summary of the Invention

### Problems to be solved by the Invention

As described above, in the conventional heat storage device as shown in Fig. 7, the enclosure 110 is wound around the compressor 102, but the former is sandwiched between a motor portion and a compression portion, thus resulting in a reduction in capacity of the heat storage material 108 and, accordingly, a reduction in heat storage capacity.

The present invention has been developed to overcome the above-described disadvantages inherent in the prior art and is intended to provide a heat storage device used in contact with a heat source and capable of increasing the capacity of a heat storage material to efficiently increase the heat storage capacity. The present invention is also intended to provide an air conditioner having such a heat storage device.

### Means to Solve the Problems

In accomplishing the above objective, the heat storage device according to the present invention includes a heat storage material in the form of a liquid that stores heat from a heat source, a heat storage tank that accommodates the heat storage material therein and has a wall to form an outer shell, and a heat exchanger accommodated within the heat storage tank to exchange heat with the heat storage material. The wall has a heat-transfer portion to transfer heat between the heat source and the heat storage tank. The heat storage tank has an upper end located above a level of an upper end of the heat-transfer portion. The heat exchanger has an upper end located above the level of the upper end of the heat-transfer portion.

This configuration can increase the capacity of the heat storage material and, at the same time, efficiently increase a temperature of the heat storage material that is not in contact with the heat-transfer portion due to convective heat transfer. Also, because the upper end of the heat storage tank is located above the level of the upper end of the heat-transfer portion, the heat storage tank can accommodate a heat exchanger increased in vertical size, which heats a heat medium by making use of heat storage, thus making it possible to efficiently use heat stored in the heat storage material.

### Effects of the Invention

According to the present invention, by locating the upper end of the heat storage tank above the level of the upper end of the heat-transfer portion, not only can the capacity of the heat storage material be increased, but the temperature of the heat storage material that is not in contact with the heat-transfer portion can be also efficiently increased due to convective heat transfer.

### Brief Description of the Drawings

Fig. 1 is a perspective view of a heat storage tank of a heat storage device according to a first embodiment of the present invention.
Fig. 2 is a perspective view of the heat storage device according to the first embodiment of the present invention and a compressor.
Fig. 3 is a cross-sectional view of the heat storage device according to the first embodiment of the present invention.
Fig. 4 is a configuration diagram of an air conditioner employing the heat storage device according to the present invention.
Fig. 5 is a schematic view depicting operation of the air conditioner of Fig. 4 and a flow of refrigerant during normal heating.
Fig. 6 is a schematic view depicting the operation of the air conditioner of Fig. 4 and a flow of refrigerant during defrosting/heating.
Fig. 7 is a cross-sectional view of a conventional heat storage device.

### Embodiments for Carrying out the Invention

The present invention is directed to a heat storage device that includes a heat storage material in the form of a liquid that stores heat from a heat source and a heat storage tank that accommodates the heat storage material therein and has a wall to form an outer shell. The wall has a heat-transfer portion to transfer heat between the heat source and the heat storage tank. The heat storage tank has an upper end located above a level of an upper end of the heat-transfer portion.

This configuration can increase a capacity of the heat storage material and, at the same time, efficiently increase a temperature of the heat storage material that is not in contact with the heat-transfer portion 4 due to convective heat transfer. Also, the heat storage tank can accommodate a heat exchanger increased in vertical size, which heats a heat medium by making use of heat storage, thus making it possible to efficiently use heat stored in the heat storage material.

The present invention is also characterized by further including a heat exchanger accommodated within the heat storage tank to exchange heat with the heat storage material, wherein the heat exchanger has an upper end located above the level of the upper end of the heat-transfer portion.

Also, the heat storage tank has a lower end located above a level of a lower end of the heat source. This configuration thermally insulates the heat storage tank from a low-temperature portion other than the heat source, for example, in winter, thus making it possible to reduce heat loss.

Embodiments of the present invention are explained hereinafter with reference to the drawings, but the present invention is not limited to the embodiments.

### (Embodiment 1)

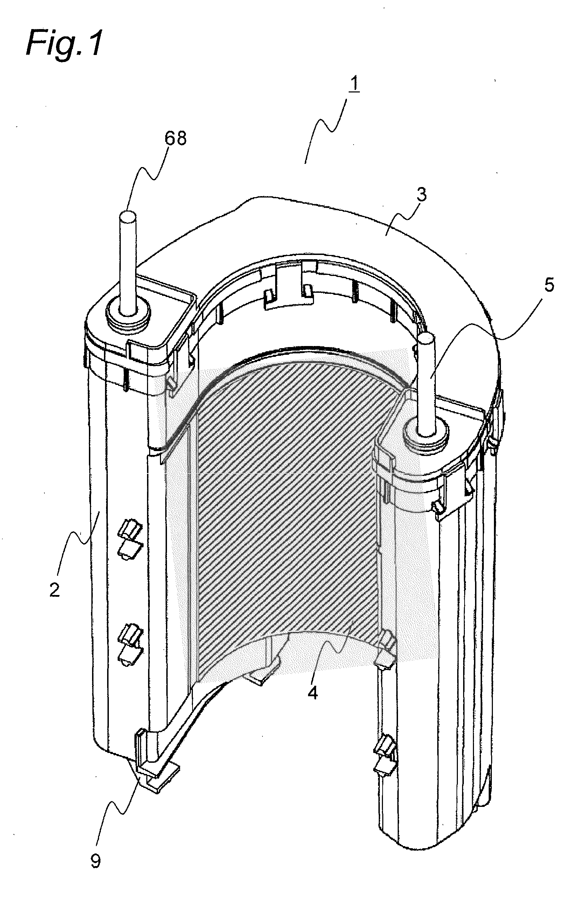

Fig. 1 is a perspective view of a heat storage device according to a first embodiment of the present invention. The heat storage device 1 according to the first embodiment of the present invention is used in contact with an outer shell of a compressor of an air conditioner to store waste heat of the compressor for subsequent use thereof. This heat storage device 1 includes a heat storage tank 2 and a lid 3 both formed of a polyphenylene sulfide (PPS) resin and also includes a heat storage heat exchanger 5 accommodated in a space encircled by them. The heat storage heat exchanger 5 is connected to refrigerant piping of the air conditioner via a connecting pipe 68 that is submerged in a heat storage material accommodated within the heat storage tank. The heat storage material is a liquid and, in this embodiment, an ethylene glycol solution containing water. The heat storage heat exchanger 5 is used to heat a refrigerant by making use of heat obtained from the heat storage material.

In Fig. 1, a portion indicated by dotted diagonal lines for convenience sake represents a heat-transfer portion 4 in this embodiment. The heat-transfer portion 4 is a part of the outer shell (partition wall) of the heat storage tank 2 and integrally formed with the heat storage tank 2 using a material similar to that of the heat storage tank 2. In the heat storage device1, the heat-transfer portion 4 is held in contact with the outer shell of the compressor, which acts as a heat source, to receive heat from the heat source. As shown in Fig. 1, an upper end of the heat-transfer portion 4 is located below a level of an upper end of the heat storage device 1.

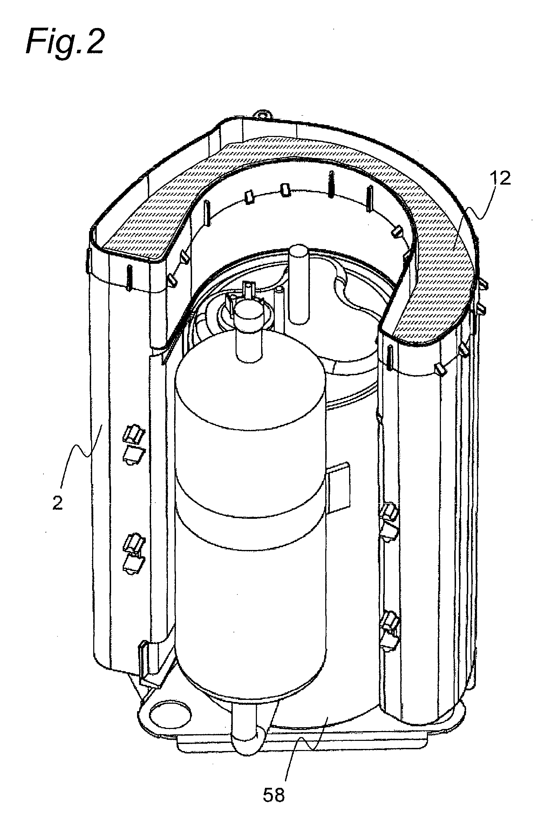

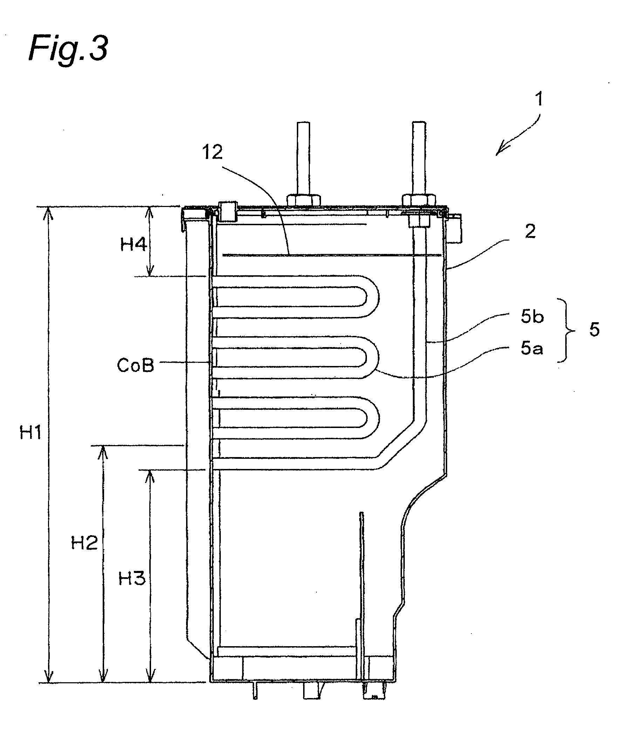

Fig. 2 is a perspective view depicting a positional relationship between the compressor 58 and the heat storage device 1 when the heat storage device 1 is used with the heat-transfer portion 4 held in contact with the compressor 58. In Fig. 2, the lid 3 is removed from the heat storage tank 2 for the purpose of clearly indicating the position of a liquid surface 12 of the heat storage material in the heat storage device 1 according to this embodiment. Fig. 3 is a cross-sectional view of the heat storage device 1 according to the present invention.

The heat storage device 1 is not provided with any agitating means for agitating the heat storage material filled therein, a temperature distribution of which is accordingly not uniform. In this invention, as shown in Fig. 3, in view of efficient heat exchange, the heat storage heat exchanger 5 is bent into a serpentine configuration and disposed at an upper portion of the heat storage tank 2.

That is, the amount of heat exchange between a refrigerant passing through the heat storage heat exchanger 5 and the heat storage material for exchanging heat with the refrigerant increases with an increase in temperature difference, followed by a reduction in time period for defrosting, but a high-temperature refrigerant gathers at an upper portion inside the heat storage tank 2 and a low-temperature refrigerant gathers at a lower portion inside the heat storage tank 2. In view of this, as shown in Fig. 3, the heat storage heat exchanger 5 has a bent portion 5a and two straight portions 5b extending upwardly straight from opposite ends of the bent portion 5a, and the bent portion 5a is entirely configured so as to snake along an inner wall surface of the heat storage tank 2 within a predetermined range of the upper portion of the heat storage tank 2.

It is assumed that the height of the heat storage tank 2 from a bottom surface thereof is indicated by H1, the height of a center of the heat storage tank 2 from the bottom surface thereof is indicated by H2 (H2=H1/2), the height of a lower end of the bent portion 5a of the heat storage heat exchanger 5 from the bottom surface of the heat storage tank 2 is indicated by H3, and the distance from an upper surface of the heat storage tank 2 to an upper end of the bent portion 5a of the heat storage heat exchanger 5 is indicated by H4. In this embodiment, H3 and H4 are set to a predetermined height and a predetermined distance, respectively.

A vertical position CoB of the center of gravity of the heat storage heat exchanger 5 is set to be higher than the vertical position H2 of the center of the heat storage tank 5. It is to be noted that the vertical position CoB of the center of gravity of the heat storage heat exchanger 5 is a position of the center of gravity of a combination of the bent portion 5a and the straight portions 5b of the heat storage heat exchanger 5. In the heat storage device 1, heat generated by the compressor 58 is stored in the heat storage material, but the temperature of the heat storage material located at an upper portion of the heat storage tank 2 is higher than that of the heat storage material located at a lower portion of the heat storage tank 2. In this heat storage device 1, because the vertical position of the center of gravity of the heat storage heat exchanger 5 is set to be higher than the vertical position of the center of the heat storage tank 2, the heat storage heat exchanger 5 performs heat exchange mainly with a relatively higher-temperature portion of the heat storage material.

On the other hand, the distance H4 from the upper surface of the heat storage tank 2 to the upper end of the bent portion 5a of the heat storage heat exchanger 5 is determined in consideration of an inclination of the heat storage tank 2. That is, the compressor 58 and the heat storage tank 2 are generally accommodated within an outdoor unit 56, which is sometimes installed outside at an angle. In consideration of such an inclination, the heat storage heat exchanger 5 is installed within the heat storage tank 2 such that the upper end of the bent portion 5a of the heat storage heat exchanger 5 is positioned below the upper surface of the heat storage tank 2 by the predetermined distance H4. The reason for this is that when the heat storage material is filled in the heat storage tank 2 to the extent that the lid 3 is not brought into contact with a liquid surface 12 of the heat storage material, even if the heat storage tank 2 is inclined at a predetermined angle (for example, about 7 degrees with respect to an installation surface), the bent portion 5a of the heat storage heat exchanger 5 is always submerged in the heat storage material.

In this embodiment, because the upper end of the heat-transfer portion 4 is located below the upper end of the heat storage device 1, as shown in Fig. 1, the liquid surface 12 of the heat storage material can be retained at a position above the upper end of the heat-transfer portion 4, as shown in Fig. 2.

Further, because the liquid surface 12 of the heat storage material can be retained at a position above the upper end of the heat-transfer portion 4, the heat storage heat exchanger 5 can be installed close to the liquid surface 12 of the heat storage material.

Also, by retaining the liquid surface 12 of the heat storage material at a level higher than the upper end of the heat-transfer portion 4, the capacity of the heat storage material can be increased in a region where heat from the heat source can be easily transferred by natural convection. Further, by extending the heat storage heat exchanger 5 to such a region, an area for heat exchange can be expanded to the region where heat from the heat source can be easily transferred.

In this embodiment, a base 9 provided in contact with a lower end of the heat storage tank 2 allows the lower end of the heat storage tank 2 and a lower end of the heat-transfer portion 4 to be located above a level of a lower end of the compressor 58. This configuration thermally insulates the heat storage tank 2 from a low-temperature portion other than the heat source particularly in winter, thus making it possible to reduce heat loss.

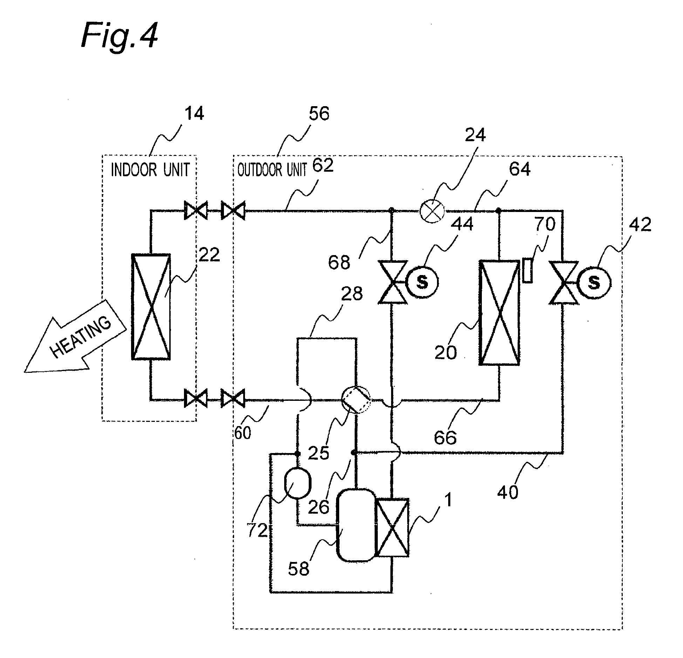

Fig. 4 depicts a configuration of an air conditioner having the heat storage device 1 according to the present invention. The air conditioner according to the present invention is made up of an outdoor unit 56, an indoor unit 14 and refrigerant piping for connecting them.

The outdoor unit 56 accommodates therein a compressor 58, a four-way valve 25, an expansion valve 24 and an outdoor heat exchanger 20. The outdoor unit 56 includes a first refrigerant pipe 26 for connecting a refrigerant discharge port of the compressor 58 to the four-way valve 25, a second refrigerant pipe 28 for connecting a refrigerant suction port of the compressor 58 to the four-way valve 25, a third refrigerant pipe 66 for connecting the four-way valve 25 to the outdoor heat exchanger 20, and a fourth refrigerant pipe 64 for connecting the outdoor heat exchanger 20 to the expansion valve 24.

The indoor unit 14 includes an indoor heat exchanger 22, a fan (not shown) and louvers (not shown) for controlling a direction of air.

A fifth refrigerant pipe 62 is provided between the expansion valve 24 and the indoor heat exchanger 22 to connect the outdoor unit 56 and the indoor unit 14 to each other. A sixth refrigerant pipe 60 is provided between the indoor heat exchanger 22 and the four-way valve 25 to connect the outdoor unit 56 and the indoor unit 14 to each other.

The outdoor unit 56 also includes a seventh refrigerant pipe 40 for connecting the first refrigerant pipe 26 to the fourth refrigerant pipe 64, a first solenoid valve 42 fitted to the seventh refrigerant pipe 40, an eighth refrigerant pipe 68 for connecting the second refrigerant pipe 28 to the fifth refrigerant pipe 62, and a second solenoid valve 44 fitted to the eighth refrigerant pipe 68.

The heat storage device 1 according to the present invention is located midway in the eighth refrigerant pipe 68, which is introduced into the heat storage device 1 and connected to the serpentine pipe of the heat exchanger. As shown in Fig. 2, the heat storage device 1 is held in close contact with the compressor 58 and located between the second refrigerant pipe 28 and the second solenoid valve 44.

The compressor 58, the fan, the louvers, the four-way valve 25, the expansion valve 24, the first solenoid valve 42 and the second solenoid valve 44 are electrically connected to and controlled by a controller (for example, a microcomputer not shown).

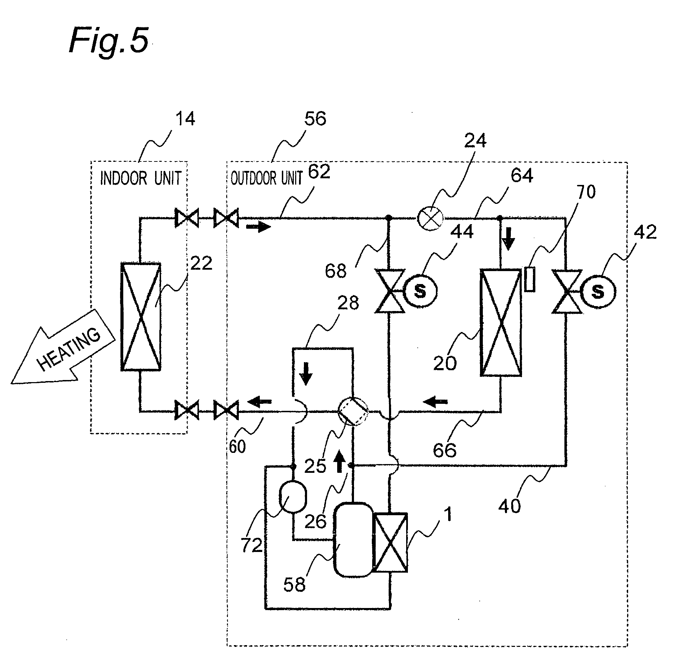

Fig. 5 is a schematic view depicting operation of the air conditioner according to the present invention and a flow of refrigerant during normal heating. A refrigerant discharged from a discharge port in the compressor 58 passes through the first refrigerant pipe 26 and the four-way valve 25 and reaches the indoor heat exchanger 22. The refrigerant condenses in the indoor heat exchanger 22 upon heat exchange with indoor air having a lower temperature than the refrigerant and reaches the expansion valve 24 via the refrigerant pipe 62. The refrigerant is reduced in pressure by the expansion valve 24 and reaches the outdoor heat exchanger 20 via the refrigerant pipe 64. The refrigerant then evaporates in the outdoor heat exchanger 20 upon heat exchange with outdoor air having a higher temperature than the refrigerant and passes through the refrigerant pipe 66, the four-way valve 25 and the refrigerant pipe 28, before the refrigerant returns to a suction port in the compressor 58.

The heat storage device 1 according to the present invention is installed in contact with the compressor 58 to store heat generated by the compressor 58 in the heat storage material. During heat storage, the first solenoid valve 42 and the second solenoid valve 44 are both closed.

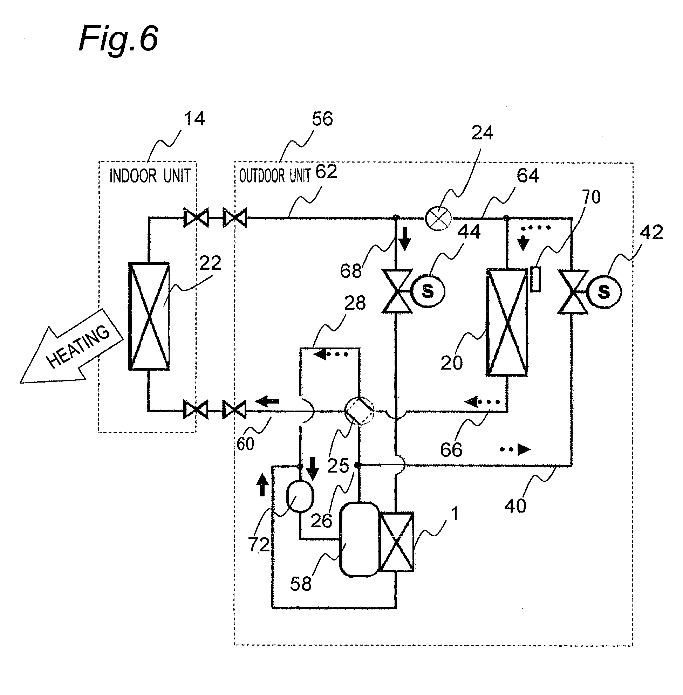

Fig. 6 is a schematic view depicting operation of the air conditioner of Fig. 4 and a flow of refrigerant during defrosting/heating. The operation of the air conditioner during defrosting/heating is next explained with reference to Fig. 6, in which solid arrows indicate a flow of refrigerant used for heating and dotted arrows indicate a flow of refrigerant used for defrosting

If frost is formed and grows on the outdoor heat exchanger 20 during the above-discussed normal heating, the airflow resistance of the outdoor heat exchanger 20 increases to thereby reduce the amount of air passing therethrough, thus resulting in a reduction of the evaporating temperature in the outdoor heat exchanger 20. As shown in Fig. 6, a temperature sensor 70 is provided to detect a piping temperature of the outdoor heat exchanger 20, and if this temperature sensor 70 detects a reduced evaporating temperature compared with an evaporating temperature when no frost is formed, the controller outputs a control signal to shift the air conditioner from the normal heating operation to the defrosting/heating operation. When the air conditioner is shifted from the normal heating operation to the defrosting/heating operation, the controller controls the first solenoid valve 42 and the second solenoid valve 44 to open them. In this case, in addition to the flow of refrigerant during the normal heating operation as discussed above, part of a gaseous refrigerant discharged from the discharge port in the compressor 58 passes through the refrigerant pipe 40 and the first solenoid valve 42 and joins a refrigerant passing through the refrigerant pipe 64 to heat the outdoor heat exchanger 20. Upon condensation, the refrigerant returns to the suction port in the compressor 58 via the refrigerant pipe 66, the four-way valve 25, the refrigerant pipe 28 and an accumulator 72.

Also, part of a liquid refrigerant diverged from the refrigerant pipe 62 passes through the refrigerant pipe 68 and the second solenoid valve 44 and absorbs heat from the heat storage material in the heat storage heat exchanger 5. The liquid refrigerant then evaporates and turns into a gas phase. The resultant gaseous refrigerant passes through the refrigerant pipe 68, then joins a refrigerant passing through the refrigerant pipe 28, and finally returns to the suction port in the compressor 58.

Although the refrigerant returning to the accumulator 72 contains a liquid refrigerant returning from the outdoor heat exchanger 20, the latter is admixed with a gaseous high-temperature refrigerant returning from the heat storage heat exchanger 5 to thereby promote evaporation of the liquid refrigerant. Accordingly, it is not likely that a liquid refrigerant may pass through the accumulator 72 and return to the compressor 58, thus making it possible to enhance the reliability of the compressor 58.

At the initiation of defrosting/heating, the temperature of the outdoor heat exchanger 20 is below the freezing point by adhesion of frost, but when the outdoor heat exchanger 20 is heated by the gaseous refrigerant discharged from the discharge port in the compressor 58, frost adhering to the outdoor heat exchanger 20 melts in the vicinity of zero degree and the temperature of the outdoor heat exchanger 20 begins to increase again upon completion of the defrosting. When the temperature sensor 70 detects such a temperature rise of the outdoor heat exchanger 20, a determination is made that the defrosting has been completed and the controller outputs a command to shift the defrosting/heating operation to the normal heating operation.

As described above, the heat storage device according to the present invention is held in close contact with the compressor 58 mounted in the air conditioner to store heat generated by the compressor 58 in the heat storage material during heating, and when the normal heating operation is shifted to the defrosting/heating operation, part of a liquid refrigerant passing through the indoor heat exchanger 22 and diverged from the refrigerant pipe 62 absorbs heat from the heat storage material in the heat storage heat exchanger 5, then evaporates and turns into a gas phase.

### Industrial Applicability

The present invention is applicable to a heat storage device for recovering heat stored in a water-containing heat storage material using a heat exchanger and also to an air conditioner employing such a heat storage device.

### Explanation of reference numerals

1 heat storage device, 2 heat storage tank, 3 lid,
4 heat-transfer portion, 5 heat storage heat exchanger, 9 base,
12 liquid surface of heat storage material, 14 indoor unit,
22 indoor heat exchanger, 24 expansion valve,
26, 28, 40, 60, 62, 64, 66, 68 refrigerant pipe, 42 first solenoid valve,
44 second solenoid valve, 56 outdoor unit, 58 compressor,
70 temperature sensor, 72 accumulator,
100 heat storage device associated with prior art,
102 compressor associated with prior art,
104 outer shell of compressor associated with prior art,
106 heat-transfer portion associated with prior art,
108 heat storage material associated with prior art,
110 heat storage tank associated with prior art,
112 refrigerant pipe associated with prior art.

## Claims

1. A heat storage device (1) comprising:
a heat source (58);
a heat storage material in form of a liquid that stores heat from the heat source (58);
a heat storage tank (2) that accommodates the heat storage material therein and has a wall to form an outer shell, the wall having a heat-transfer portion (4) to transfer heat between the heat source (58) and the heat storage tank (2); and
a heat exchanger (5) accommodated within the heat storage tank (2) to exchange heat with the heat storage material;
**characterized by**
the heat storage tank (2) has an upper end located above a level of an upper end of the heat-transfer portion (4); and
the heat exchanger (5) has an upper end located above the level of the upper end of the heat-transfer portion (4).

2. The heat storage device (1) according to claim 1, wherein the heat storage tank (2) has a lower end located above a level of a lower end of the heat source (58).

3. An air conditioner comprising a heat storage device (1) according to claims 1 or 2.

## Patentansprüche

1. Wärmespeichervorrichtung (1), enthaltend:
eine Wärmequelle (58);
ein Wärmespeichermaterial in Form einer Flüssigkeit, welche Wärme aus der Wärmequelle (58) speichert;
einen Wärmespeicherstank (2), welcher das Wärmespeichermaterial darin aufnimmt und eine Wand zur Bildung eines äußeren Gehäuses aufweist, wobei die Wand einen Wärmeübertragungsabschnitt (4) aufweist, um Wärme zwischen der Wärmequelle (58) und dem Wärmespeichertank (2) zu übertragen; und
einen Wärmetauscher (5), welcher innerhalb des Wärmespeichertanks (2) untergebracht ist, um Wärme an das Wärmespeichermaterial zu übertragen;
**dadurch gekennzeichnet, dass**
der Wärmespeichertank (2) ein oberes Ende aufweist, welches über einer Höhe eines oberen Endes des Wärmeübertragungsabschnitts (4) angeordnet ist; und
der Wärmetauscher (5) ein oberes Ende aufweist, welches über der Höhe des oberen Endes des Wärmeübertragungsabschnitts (4) angeordnet ist.

2. Wärmespeichervorrichtung (1) nach Anspruch 1, wobei der Wärmespeichertank (2) ein unteres Ende aufweist, welches über einer Höhe eines unteren Endes der Wärmequelle (58) angeordnet ist.

3. Klimaanlage mit einer Wärmespeichervorrichtung (1) nach Anspruch 1 oder 2.

## Revendications

1. Dispositif de stockage de chaleur (1), comprenant:
une source de chaleur (58);
une matière de stockage de chaleur sous forme d'un liquide qui accumule de la chaleur en provenance de ladite source de chaleur (58);
un réservoir de stockage de chaleur (2) qui reçoit ladite matière de stockage de chaleur à l'intérieur et présente une paroi pour former un boîtier extérieur, la paroi présentant une portion de transfert de chaleur (4) afin de transférer de la chaleur entre ladite source de chaleur (58) et ledit réservoir de stockage de chaleur (2); et
un échangeur de chaleur (5) qui est logé à l'intérieur dudit réservoir de stockage de chaleur (2) afin de transférer de la chaleur vers la matière de stockage de chaleur;
**caractérisé par le fait que**
ledit réservoir de stockage de chaleur (2) présente une extrémité supérieure située au-dessus d'un niveau d'une extrémité supérieure de ladite portion de transfert de chaleur (4); et
ledit échangeur de chaleur (5) présente une extrémité supérieure située au-dessus du niveau de l'extrémité supérieure de la portion de transfert de chaleur (4).

2. Dispositif de stockage de chaleur (1) selon la revendication 1, dans lequel ledit réservoir de stockage de chaleur (2) présente une extrémité inférieure située au-dessus d'un niveau d'une extrémité inférieure de ladite source de chaleur (58).

3. Climatiseur comprenant un dispositif de stockage de chaleur (1) selon les revendications 1 ou 2.
